**Europäisches Patentamt**

**European Patent Office**

**Office européen des brevets**

(19)

(11) Veröffentlichungsnummer : **0 100 867**
**B1**

# EUROPÄISCHE PATENTSCHRIFT

(12)

(45) Veröffentlichungstag der Patentschrift :
**28.05.86**

(21) Anmeldenummer : **83106593.3**

(22) Anmeldetag : **06.07.83**

(51) Int. Cl.⁴ : **B 65 G   1/04**

(54) Vorrichtung zum Übergeben oder Übernehmen von Fördergut.

(30) Priorität : **06.08.82 CH 4745/82**

(43) Veröffentlichungstag der Anmeldung :
**22.02.84 Patentblatt 84/08**

(45) Bekanntmachung des Hinweises auf die Patenterteilung : **28.05.86 Patentblatt 86/22**

(84) Benannte Vertragsstaaten :
**AT BE DE FR GB IT NL SE**

(56) Entgegenhaltungen :
**DE-A- 2 849 736**
**FR-A- 2 220 441**
**GB-A-   656 828**
**US-A- 3 681 607**

(73) Patentinhaber : **INVENTIO AG**
**Seestrasse 55**
**CH-6052 Hergiswil NW (CH)**

(72) Erfinder : **Feldmann, Hans-Ueli**
**Paul Jenni-strasse 3**
**CH-2553 Safnern (CH)**
Erfinder : **Braendli, Max**
**Höheweg 2**
**CH-2553 Safnern (CH)**
Erfinder : **Heiz, Ulrich, Dipl.-Ing.**
**Staatsstrasse 94**
**CH-3044 Säriswil (CH)**

## Beschreibung

Die Erfindung betrifft eine Vorrichtung zum Übergeben oder Übernehmen von Fördergut gemäss dem Oberbegriff des Patentanspruches 1.

Beim Umschlag von Fördergut finden angetriebene Rollenförderer, die auf einem Fahrwerk aufgebaut sind, Verwendung, um verschiedene Fördergüter, die von einer Förderstrecke auf eine andere Förderstrecke umzuladen sind, zwischenzulagern. Die Zwischenlager werden zu diesem Zweck ebenfalls mit Rollenförderern ausgerüstet, die als nicht angetriebene, jedoch als antreibbare Rollenförderer ausgebildet sind. Mit Hilfe eines am Fahrwerk des fahrbaren Rollenförderers angeordneten Kupplungssystemes lassen sie sich im gleichen Sinne antreiben, so dass ein Fördergut, das vom fahrbaren Rollenförderer getragen wird, an einen Lagerplatz übergeben, oder ein an einem Lagerplatz abgestelltes Fördergut von einem leeren fahrbaren Rollenförderer übernommen werden kann. Solche Vorrichtungen ermöglichen es, mehrere auf beiden Seiten einer Förderstrecke angeordnete Lagerplätze mit einem fahrbaren Rollenförderer zu beschicken oder zu leeren. Der fahrbare Rollenförderer ist demgemäss quer zur Fahrtrichtung angetrieben und so ausgebildet, dass er jeden beliebigen Lagerplatz aus eigener Kraft anfahren und anschliessend den stationären Rollenförderer für die Übergabe oder Übernahme des Fördergutes antreiben kann.

Aus der DE-OS 28 39 496 ist eine Vorrichtung zum Übergeben von Fördergut von einem schienengebundenen, angetriebenen Rollenförderer auf einen als Lagerplatz ausgebildeten, antreibbaren Rollenförderer mit Reibschluss bekanntgeworden. Der schienengebundene Rollenförderer wird dabei in Förderrichtung soweit verfahren, bis ein am Rahmen des Rollenförderers angeordnetes, angetriebenes Reibrad ein am Rahmen jedes stationären Rollenförderers angeordnetes, antreibbares Reibrad durch Reibung mitdreht. Damit ist es möglich, mit nur einem angetriebenen, auf einem Fahrwerk befindlichen Rollenförderer mehrere Lagerplätze, die links und rechts der Fahrschiene des Fahrwerkes angeordnet sind, mit Fördergut zu belegen oder von diesen Lagerplätzen Fördergut wieder zu entnehmen. Der Nachteil dieser bekannten Fördervorrichtung liegt darin, dass die Druckkräfte, die für den Reibradantrieb für den stationären Rollenförderer nötig sind, Reaktionskräfte bewirken, die von den Schienen, auf denen das Fahrwerk des fahrbaren Rollenförderers geführt ist, aufgenommen werden müssen. Ein nicht schienengebundenes Fahrwerk würde durch diese Reaktionskräfte seitlich weggedrückt und ausser Eingriff gebracht.

Aus der DE-OS 19 63 043 ist ein Förderzeug für Hochregale mit an den Gängen angeordneten Abstellplätzen zur Aufnahme von Fördergut bekanntgeworden. Dieses Förderzeug weist unter anderem ebenfalls einen schienengebundenen, horizontal arbeitenden Längsförderer mit einem aufgebauten Querförderer auf, wobei dieser Querförderer mit den Querförderern der Abstellplätze zum gleichsinnigen Antrieb kuppelbar ist. Der Antrieb erfolgt über ein einschwenkbares Zwischenzahnrad, das ein treibendes und ein getriebenes Zahnrad miteinander verbindet. Auch diese Ausführung hat den Nachteil, dass durch die Zahndrücke Kraftkomponenten entstehen, die von den Schienen, auf denen der Längsförderer geführt ist, aufgenommen werden müssen. Ein nicht schienengebundener Längsförderer könnte durch diese Kraftkomponenten ebenfalls seitlich weggedrückt und die Zahnräder ausser Eingriff gebracht werden.

Mit der DE-A 28 49 736 ist eine schienenlose Flurförderanlage bekanntgeworden, bei welcher ein Förderfahrzeug längs einer mittleren, im Hallenboden versenkt angeordneten Schleifleistungs-Schiene verkehrt. Das Förderfahrzeug weist einen quer zur Fahrtrichtung angeordneten Kettenförderer auf, dessen Antrieb über eine Kupplungseinrichtung auch stationäre Kettenförderer antriebt. Der Kupplungs-Abtriebteil der stationären Kettenförderer ist parallel zur Fahrtrichtung des Förderfahrzeuges fest an den stationären Kettenförderern angeordnet. Zum Andocken wird der auf dem Förderfahrzeug ebenfalls parallel zur Fahrtrichtung des Förderfahrzeuges an einem senkrecht zur Fahrtrichtung ausschwenkbaren Schwenkarm vorgesehene Kupplungs-Antriebteil während der Fahrt des Förderfahrzeuges ausgeschwenkt und durch die Fahrbewegung des Förderfahrzeuges in den stationären Kupplungs-Abtriebteil eingefahren.

Diese Kupplungseinrichtung weist den Vorteil auf, dass beim Antreiben keine seitlichen Kraftkomponenten vom Förderfahrzeug aufgenommen werden müssen, welche das Förderfahrzeug seitlich wegdrücken könnten.

Ein Nachteil dieser bekannten Einrichtung liegt aber darin, dass die Zufahrt des Förderfahrzeuges, insbesondere der Abstand zwischen der stationären Förderbahn und dem Förderfahrzeug, zum Einkuppeln sehr genau sein muss. Eine Korrektur der Ausschwenkdistanz ist nicht möglich, da dadurch die Achshöhe des Kupplungs-Antriebteiles gegenüber derjenigen des Kupplungs-Abtriebteiles ändern würde. Ein weiterer Nachteil liegt auch darin, dass die Zufahrt des Förderfahrzeuges zum Andocken stets in nur einer Fahrtrichtung erfolgen muss ; das gleiche gilt auch beim Ankuppeln, wobei zusätzlich noch ein Fahrtrichtungswechsel hinzukommt, wenn sich das Förderfahrzeug in einer bestimmten Vorwärtsrichtung bewegt. Nachteilig kann sich auch das bereits während der Fahrt nötige Ausschwenken des Kupplungsteils des Förderfahrzeuges auswirken, indem das aus dem normalen Fahrprofil des Förderfahrzeuges herausragende Kupplungsteil während der Zu- oder Wegfahrt irgendwo anstossen könnte.

Der Erfindung liegt die Aufgabe zugrunde, eine auf der fahrbaren Fördereinrichtung angeordnete Vorrichtung zum Antreiben einer stationären Fördereinrichtung vorzuschlagen, bei welcher die Zufahrt und die Wegfahrt des Förderfahrzeuges beliebig in beiden Fahrtrichtungen möglich ist, welche nur beim Stillstand des Förderfahrzeuges aus dem normalen Fahrprofil des Förderfahrzeuges austritt und welche Abstandsungenauigkeiten zwischen dem Förderfahrzeug und der stationären Fördereinrichtung überbrücken kann und gleichzeitig Halteungenauigkeiten zwischen dem Förderfahrzeug und der stationären Fördereinrichtung beim Kuppeln automatisch ausgleicht.

Diese Aufgabe wird durch die in den Ansprüchen gekennzeichnete Erfindung gelöst.

Die durch die Erfindung erreichten Vorteile sind im wesentlichen darin zu sehen, dass die Zufahrt und die Wegfahrt des Förderfahrzeuges zum Kuppeln der Fördereinrichtungen beliebig in beiden möglichen Fahrtrichtungen gewährleistet ist, dass der am Förderfahrzeug angeordnete Kupplungsteil zum Kuppeln erst beim Stillstand des Förderfahrzeuges ausgefahren werden muss, dass Abstandsungenauigkeiten zwischen dem Förderfahrzeug und der stationären Fördereinrichtung durch die Ausfahrdistanz des ausfahrbaren Kupplungsteils ausgeglichen werden können, und dass normale Halteungenauigkeiten des Förderfahrzeuges beim Kuppeln durch den zu seiner Achsrichtung senkrecht am Fahrwerk allseitig federnd abgestützten, ausfahrbaren, Kupplungsteil automatisch ausgeglichen werden.

Auf beiliegenden Zeichnungen ist ein Ausführungsbeispiel der Erfindung dargestellt, das im folgenden näher erläutert wird. Es zeigen :

Figur 1 ein Prinzipschema der erfindungsgemässen Vorrichtung,

Figur 2 einen Grundriss der erfindungsgemässen Vorrichtung,

Figur 3 einen Schnitt A-A gemäss Fig. 2 und

Figur 4 einen Schnitt B-B gemäss Fig. 2.

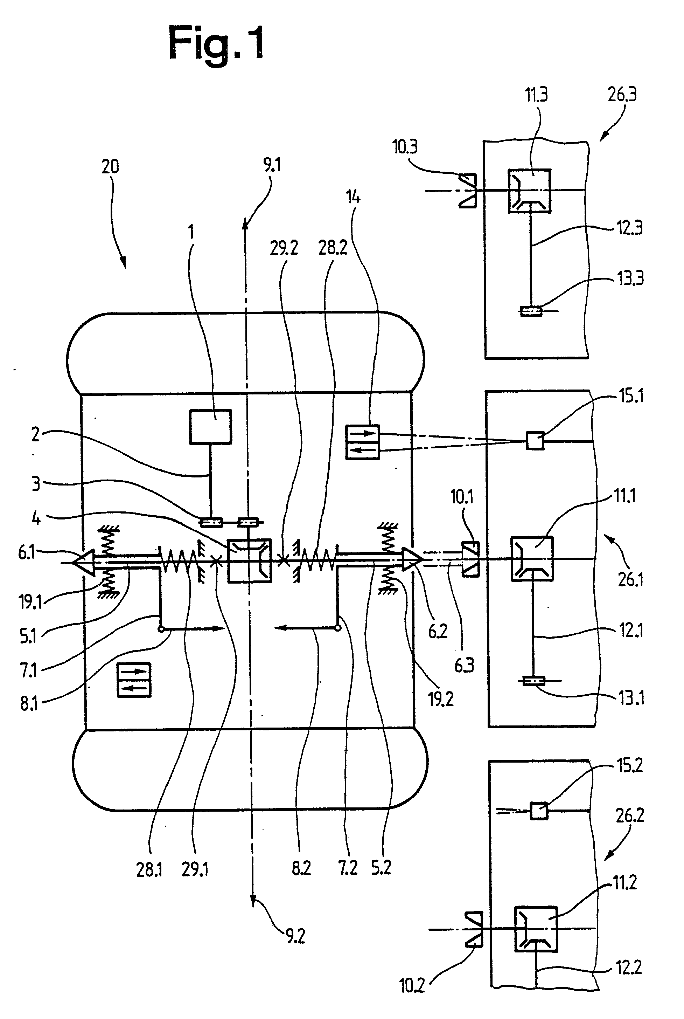

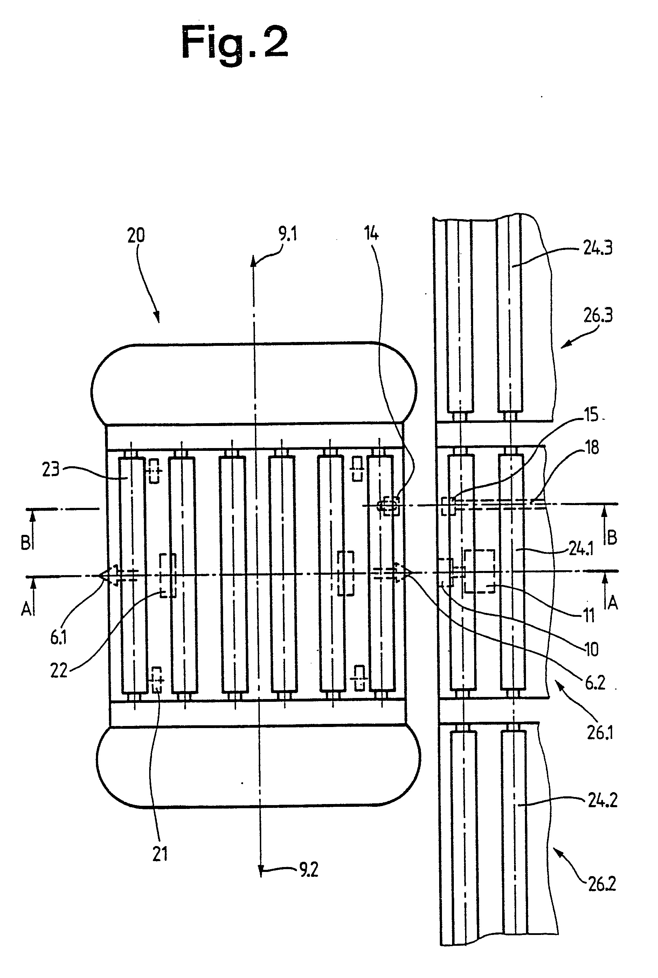

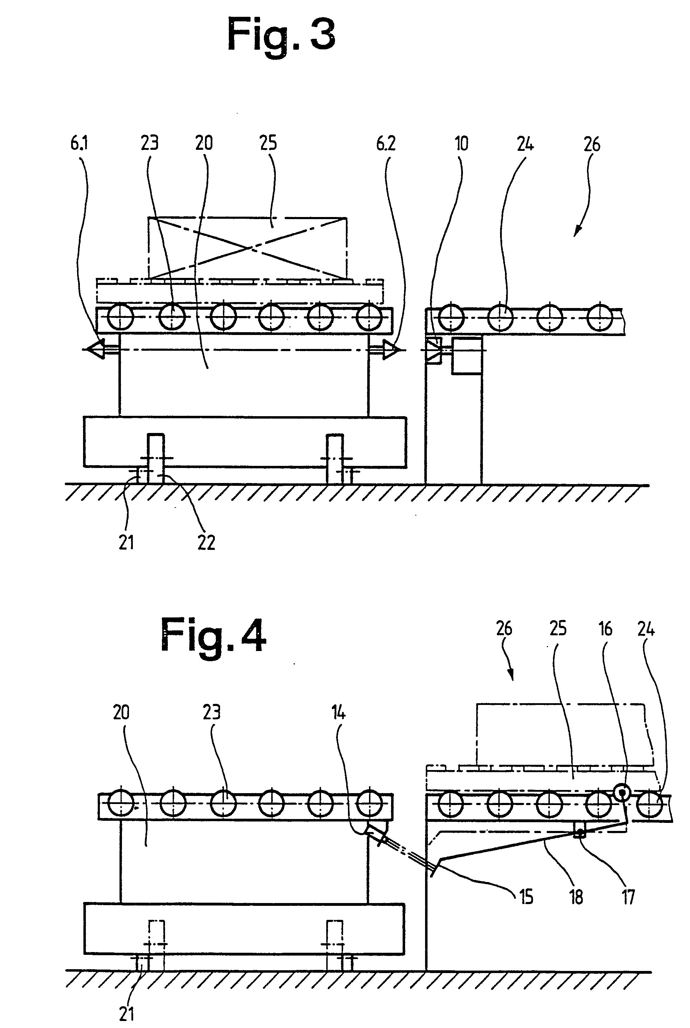

In Fig. 1 wird ein Antrieb für einen angetriebenen Rollenförderer 23 und mindestens einen antreibbaren Rollenförderer 26 mit 1 bezeichnet. Eine Antriebswelle 2 verbindet den Antrieb 1 über ein Kettengetriebe 3 mit einem Kegelradgetriebe 4. An den Ausgangswellen des Kegelradgetriebes 4 ist eine linke Halbwelle 5.1 und eine rechte Halbwelle 5.2 angeschlossen, wobei als Bindeglied je ein Kardangelenk 29.1, 29.2 dient. Auf den Halbwellen 5.1, 5.2 ist je eine ebenfalls als Halbwelle ausgebildete Kupplungshälfte 6.1, 6.2 mit einem Kupplungskonus mit Vierkant aufgesteckt und in der Achsrichtung verschiebbar und verdrehfest gelagert. Eine am Fahrwerk 20 abgestützte Druckfeder 28.1, 28.2 drückt den Kupplungskonus in eine Andockstellung 6.3. Die Kupplungshälfte 6.1, 6.2 ist senkrecht zu ihrer Achsrichtung durch Federn 19.1, 19.2 allseitig gefedert abgestützt, damit ein ungenaues Andocken automatisch ausgeglichen wird. Die Kupplungshälfte 6.1, 6.2 wird durch einen Kurbeltrieb 7.1, 7.2 mit einem nicht dargestellten flexiblen Zugelement in einer Ruhelage gehalten, wobei die Kurbel eine knapp überschrittene Totpunktlage einnimmt. Der Kurbeltrieb 7.1, 7.2 wird von einem Antriebsmotor 8.1, 8.2 betätigt. Die bisher aufgezählten Einzelteile sind in einem Fahrwerk 20 eingebaut, welches gemäss den Figuren 2, 3 und 4 von den Stützrollen 21 getragen und von den Antriebsrollen 22 bewegt wird. Auf dem Fahrwerk 20 ist der angetriebene Rollenförderer 23 aufgebaut, der das Fördergut 25 trägt. Die Fahrtrichtungen des Fahrwerkes 20 sind mit den Pfeilen 9.1 bzw. 9.2 angedeutet. Auf der rechten und/oder auf der linken Seite der Fahrbahn des Fahrwerkes 20 sind Lagerplätze 26.1, 26.2, 26.3 angeordnet, die je mit einem antreibbaren Rollenförderer 24 ausgerüstet sind. Der antreibbare Rollenförderer 24 wird über ein zugeordnetes Gegenstück 10.1, 10.2, 10.3 von der Kupplungshälfte 6.1, 6.2 angetrieben. Ein Kegelradgetriebe 11.1, 11.2, 11.3 überträgt die Antriebsbewegung über eine Antriebswelle 12.1, 12.2, 12.3 und ein Kettengetriebe 13.1, 13.3 auf die Rollen des antreibbaren Rollenförderers 24. Eine am Fahrwerk 20 angeordnete optische Abtasteinrichtung 14 kontrolliert über ein an jedem antreibbaren Rollenförderer 24 befestigtes Gegenstück 15, ob der Lagerplatz 26.1, 26.2, 26.3 beladen oder leer ist. Das Gegenstück 15 ist als kippbarer Reflektor ausgebildet, bestehend aus einer vom Fördergut 25 betätigten Steuerrolle 16, einem Gestänge 18 und einem Drehpunkt 17.

Die vorstehend beschriebene Vorrichtung arbeitet wie folgt :

Mit dem induktiv gelenkten, schienenlosen und unbemannten Fahrwerk 20 wird das Fördergut 25 beispielsweise von einer Fabrikationsstelle an einen Lagerplatz eines Zwischenlagers gefördert. Das Fördergut ruht auf dem Fahrwerk aufgebauten, quer zur Fahrtrichtung drehbaren, angetriebenen Rollenförderer. Die Lagerplätze können rechts und/oder links der Förderstrecke des Fahrwerkes angeordnet sein, wobei jedem Lagerplatz ein antreibbarer Rollenförderer zugeordnet ist. Das beladene Fahrwerk läuft einen vorbestimmten Lagerplatz zum Andocken an. Der Abstand des Fahrwerkes zum Lagerplatz bestimmt ein im Fussboden unsichtbar verlegter Leitdraht. Kleinste Abweichungen vom Fahrkurs werden augenblicklich automatisch korrigiert. Mit der gleichen Einrichtung wird am vorgegebenen Lagerplatz auch die Anhaltegenauigkeit in der Fahrtrichtung geregelt. Nach dem Stillstand des Fahrwerkes kontrolliert die optische Abtasteinrichtung den Lagerplatz. Ist er nicht belegt, nimmt der am antreibbaren Rollenförderer angeordnete Reflektor eine Lage ein, bei welcher die von der Abtasteinrichtung ausgesandten Impulse reflektiert und wieder empfangen werden. Durch diese Positionsmeldung wird das Andocken ausgelöst. Der Antriebsmotor 8.1, 8.2 des Kurbeltriebes 7.1, 7.2 dreht die Kurbel aus ihrer Totpunktlage heraus, wobei die Kupplungshälfte 6.1, 6.2 durch die Kraft der Feder 28.1, 28.2 gegen das zugeordnete, am antreibbaren Kettenförderer angeordnete Gegenstück 10.1, 10.2 ausgefahren wird, bis sich die beiden Kupplungselemente berühren. Der angetriebene Rollenförderer 23 und die Kupplungshälfte 6.1, 6.2 werden nun gleichzeitig durch den Antrieb 1 angetrieben, wobei die Kupplungshälfte 6.2 im Gegenstück 10.1 einschnappt und über ein Vierkant die Rotation gleichsinnig auf den ortsfesten, antreibbaren Rollenförderer 24.1 übertragen wird. Die Kupplungshälfte 6.1, 6.2 ist auf der Antriebsseite mit einem Kardangelenk 29.1, 29.2 mit der Ausgangswelle des Kegelradgetriebes verbunden und auf der Gegenseite senkrecht zu ihrer Achsrichtung allseitig gefedert abgestützt, so dass normale Anhalteungenauigkeiten des Fahrwerkes automatisch ausgeglichen werden. Die beiden Rollenförderer werden so lange in Betrieb gehalten, bis das Fördergut 25 die hintere Stelle des Lagerplatzes 26 erreicht und die Steuerrolle 16 nach unten drückt. Der Reflektor wird dadurch über das Gestänge 18 um den Drehpunkt 17 hochgekippt und aus dem Einflussbereich der Abtasteinrichtung herausgebracht. Der Antrieb für die Rollenförderer wird gestoppt und die Kupplungshälfte 6.2 gegen die Kraft der Feder 28.2 vom Antriebsmotor 8.2 des Kurbeltriebes 7.2 aus der Kuppelstellung zurückgezogen. Hat die Kurbel die Totpunktlage überschritten, gibt ein Rückmeldekontakt die Fahrt für das Fahrwerk frei.

Die Übernahme eines Fördergutes von einem Lagerplatz durch ein leeres Fahrwerk geschieht sinngemäss in umgekehrter Reihenfolge, wobei das Ausfahren der Kupplungshälfte erst stattfindet, wenn die Abtastvorrichtung keine ausgesandten Impulse reflektiert zurückerhält und dadurch festgestellt hat, dass auf dem Lagerplatz ein Fördergut vorhanden ist.

Anstelle der im Beispiel vorgeschlagenen, zum Ausgleichen von Anfahrungenauigkeiten am Fahrwerk gefedert abgestützten äusseren Prismen der Kupplungshälften 6.1, 6.2 und der drehbar gelagerten an den Lagerplätzen fest angebrachten Gegenstücke 10, könnten auch drehbar und schiebbar gelagerte, aber am Fahrwerk fest angeordnete, äussere Prismen und drehbar gelagerte, aber gefedert abgestützte, Gegenstücke an den Lagerplätzen vorgesehen werden.

Zur Aufnahme von Winkelfehlern bei ungenauem Positionieren des Fahrwerkes am Lagerplatz wird der Vierkant des Kupplungskonus vorteilhafterweise mit sphärisch gerundeten Flanken ausgerüstet.

Damit das Fahrwerk optimal einsetzbar ist, sind die optischen Abtasteinrichtungen auf den Breitseiten des Fahrwerkes zentralsymmetrisch anzuordnen. Ein um 180° gewendetes Fahrwerk kann dadurch ohne Schwierigkeiten ebenfalls am Lagerplatz wieder andocken.

## Patentansprüche

1. Vorrichtung zum Uebergeben oder Uebernehmen von Fördergut (25) von einer auf einem Fahrwerk (20) einer, insbesondere schienenlosen Flurförderanlage angeordneten, durch einen mit einer bewegbaren Kupplungshälfte (6.1, 6.2) verbundenen Motor angetriebenen Fördereinrichtung (23) an mindestens eine, oder von mindestens einer, als Lageplatz (26) ausgebildete, durch ein mit der Kupplungshälfte (6.1, 6.2) kuppelbaren Gegenstück (10) gleichsinnig antreibbare Fördereinrichtung (24), dadurch gekennzeichnet, dass die Fördereinrichtung ein Rollenförderer (23) ist, und die auf eine Halbwelle (5.1, 5.2) aufgesteckte Kupplungshälfte (6.1, 6.2) an den beiden parallel zur Fahrtrichtung des Fahrwerkes (20) verlaufenden Seiten am Fahrwerk (20) angeordnet und horizontal und rechtwinklig zur Fahrtrichtung verschiebbar gelagert ist, wobei die Halbwelle (5.1, 5.2) einerends durch ein Kardangelenk (29.1, 29.2) mit einem zentral angeordneten Getriebe (4) verbunden ist und die einen Kupplungskonus tragende auf der Halbwelle (5.1, 5.2) gleitend geführte durch die Kraft einer Feder (28.1, 28.2) in das an der antreibbaren Fördereinrichtung (24) vorgesehene Gegenstück (10) einschiebbare Kupplungshälfte (6.1, 6.2) anderenends senkrecht zu ihrer Achsrichtung am Fahrwerk (20) federnd abgestützt ist.

2. Vorrichtung nach Anspruch 1, dadurch gekennzeichnet, dass am Fahrwerk (20) ein die Kupplungshälfte (6.1, 6.2) nach dem Ueberschreiten einer Totpunktlage, entgegen der Kraft der Feder (28.1, 28.2) in einer Ruhelage haltender Kurbelantrieb (7.1, 7.2) angeordnet ist.

3. Vorrichtung nach Anspruch 1, dadurch gekennzeichnet, dass die Kupplungshälfte (6.1, 6.2) ein Kupplungskonus mit Vierkant und das Gegenstück (10) eine Kupplungsglocke mit Vierkant ist.

4. Vorrichtung nach Anspruch 1, dadurch gekennzeichnet, dass am Fahrwerk (20) eine mit einem am Lagerplatz (26, 26.1, 26.2, 26.3) kippbar gelagerten Gegenstück (15, 15.1, 15.2) zusammenarbeitende, das Fördergut überwachende Abtasteinrichtung (14) angeordnet ist.

5. Vorrichtung nach Anspruch 4, dadurch gekennzeichnet, dass die Abtasteinrichtung (14) eine Lichtschranke und das Gegenstück (15, 15.1, 15.2) ein Reflektor ist.

## Claims

1. Device for the handing-over or taking-over of conveyed stock (25) by a conveying equipment (23), which is arranged on an undercarriage (20) of a trolley conveyor system — especially a railless one — and driven by a motor connected with a movable clutch half (6.1, 6.2), to or from at least one conveying equipment (24), which is constructed as storage place (26) and drivable in like sense through a counterpart (10) couplable with the clutch half (6.1, 6.2), characterised thereby, that the conveying equipment is a roller conveyor (23) and the clutch half (6.1, 6.2), which is plugged onto a half shaft (5.1, 5.2), is arranged at the undercarriage (20) at both the sides extending parallelly to the direction of travel of the undercarriage (20) and borne to be displaceable horizontally and at right angles to the direction of travel, wherein the half shaft (5.1, 5.2) is connected at one end through a cardan joint (29.1, 29.2) with a centrally arranged gear (4) and the clutch half (6.1, 6.2), which carries a clutch cone, is slidingly guided on the half shaft (5.1, 5.2) and which is pushable by the force of a spring (28.1, 28.2) into the counterpart (10) provided at the drivable conveying equipment (24), is resiliently supported at the undercarriage (20) perpendicularly to its axial direction at the other end.

2. Device according to claim 1, characterised thereby, that a crank drive (7.1, 7.2), which after passing through a dead centre position holds the clutch half (6.1, 6.2) in a rest position against the force of the spring (28.1, 28.2), is arranged at the undercarriage (20).

3. Device according to claim 1, characterised thereby, that the clutch half (6.1, 6.2) is a clutch cone with a portion of square cross-section and the counterpart (10) is a clutch cage with a portion of square cross-section.

4. Device according to claim 1, characterised thereby, that a scanning equipment (14), which monitors the conveyed stock and co-operates with a counterpart (15, 15.1, 15.2) tiltably mounted at the storage place (26, 26.1, 26.2, 26.3), is arranged at the undercarriage (20).

5. Device according to claim 4, characterised thereby, that the scanning equipment (14) is a light barrier and the counterpart (15, 15.1, 15.2) is a reflector.

**Revendications**

1. Dispositif pour le transfert d'objets à transporter (25) d'un transporteur (23) disposé sur un mécanisme de déplacement (20) d'une installation de transport au sol, notamment sans rails, et entraîné par l'intermédiaire d'un moteur relié à un demi-accouplement mobile (6.1, 6.2) à, ou depuis, au moins un transporteur (24) constitué en tant qu'emplacement de dépôt (26) et capable d'être commandé dans le même sens par l'intermédiaire d'un élément (10) pouvant être accouplé au demi-accouplement (6.1, 6.2) et formant contrepartie, caractérisé en ce que le transporteur est un transporteur à rouleaux (23) et que le demi-accouplement (6.1, 6.2) monté sur un demi-arbre (5.1, 5.2) est disposé sur le mécanisme de déplacement (20) aux deux côtés s'étendant parallèlement à la direction de marche du mécanisme de déplacement (20) et est logé coulissant horizontalement et perpendiculairement à la direction de marche, le demi-arbre (5.1, 5.2) étant, à l'une des extrémités, relié par une articulation à cardan (29.1, 29.2) à un engrenage de commande (4) disposé au centre, et le demi-accouplement (6.1, 6.2), qui porte un cône d'accouplement et qui est guidé coulissant sur le demi-arbre (5.1, 5.2) par l'intermédiaire de la force d'un ressort (28.1, 28.2) et peut s'engager par coulissement dans l'élément formant contrepartie (10) prévu sur le transporteur (24) capable d'être commandé, prenant, à l'autre extrémité, élastiquement appui sur le mécanisme d'entraînement (20) perpendiculairement à sa direction axiale.

2. Dispositif selon la revendication 1, caractérisé en ce que sur le mécanisme de déplacement (20) est disposée une commande à manivelle (7.1, 7.2) qui, après le dépassement d'une position de point mort, maintient le demi-accouplement (6.1, 6.2) dans une position de repos à l'encontre de la force du ressort (28.1, 28.2).

3. Dispositif selon la revendication 1, caractérisé en ce que le demi-accouplement (6.1, 6.2) est un cône d'accouplement à quatre pans et l'élément (10) formant contrepartie une cloche d'accouplement à quatre pans.

4. Dispositif selon la revendication 1, caractérisé en ce que sur le mécanisme de déplacement (20) est disposée une installation d'exploration (14) qui contrôle les objets à transporter et coopère avec un élément (15, 15.1, 15.2) formant contrepartie logé pivotant à l'emplacement de dépôt (26, 26.1, 26.2, 26.3).

5. Dispositif selon la revendication 4, caractérisé en ce que l'installation d'exploration (14) est une barrière lumineuse et l'élément (15, 15.1, 15.2) formant contrepartie un réflecteur.

# Fig.1

Fig.2

0 100 867

2

0 100 867

# Fig. 3

# Fig. 4

3